# EUROPÄISCHE PATENTSCHRIFT

(11) **EP 2 425 162 B1**
(45) Veröffentlichungstag und Bekanntmachung des Hinweises auf die Patenterteilung: **23.07.2014**
(21) Anmeldenummer: 10718469.9
(22) Anmeldetag: 17.04.2010
(51) Int. Cl.: F16K 15/03, F16K 15/14

(54) **RÜCKSCHLAGVENTIL**
CHECK VALVE
CLAPET ANTIRETOUR

(30) Priorität: 28.04.2009 DE 102009018930
(43) Veröffentlichungstag der Anmeldung: 07.03.2012
(73) Patentinhaber: Prettl, Rolf, 72072 Tübingen (DE)
(72) Erfinder: BORST, Peter, 88527 Unlingen-Uigendorf (DE); SCHREIER, Philip, Simpsonville, SC 29681 (US)
(74) Vertreter: Witte, Weller & Partner Patentanwälte mbB
(86) Internationale Anmeldenummer: PCT/EP2010/002365
(87) Internationale Veröffentlichungsnummer: WO 2010/124798

(56) Entgegenhaltungen:
- EP-A1- 0 560 221
- DE-U1-202005 019 518
- US-A- 1 408 724
- US-A- 3 473 561
- US-A- 6 050 294

## Beschreibung

Die vorliegende Erfindung betrifft ein Rückschlagventil mit einem Ventilgehäuse, an dem ein Ventilsitz ausgebildet ist, der in Bezug auf eine Strömungsrichtung als Schrägfläche ausgebildet ist, und mit einem Sperrelement, das wenigstens einen flächigen Sperrlappen aus einem elastisch verformbaren Material aufweist, der in einer Sperrposition an dem Ventilsitz anliegt und in einer Öffnungsposition von dem Ventilsitz abgehoben ist, um den Durchgang von Fluid zu ermöglichen, wobei auf der dem Ventilsitz abgewandten Seite des Sperrlappens ein Anschlagelement angeordnet ist, gegen das der Sperrlappen anschlagen kann, um das Maß des Abhebens des Sperrlappens von dem Ventilsitz zu begrenzen, wobei das Sperrelement zwei Sperrlappen aufweist, die im Längsschnitt V-förmig ausgerichtet sind.

Die vorliegende Erfindung betrifft ferner eine Fluidpumpe mit einem Pumpengehäuse und einem darin verschieblich gelagerten Kolben, der mit dem Pumpengehäuse einen Druckraum bildet, wobei ein Sauganschluss der Pumpe über ein erstes Rückschlagventil mit dem Druckraum verbunden ist und wobei der Druckraum über ein zweites Rückschlagventil mit einem Druckanschluss der Pumpe verbunden ist.

Ein derartiges Rückschlagventil ist allgemein bekannt. Ein Rückschlagventil dient generell zur Richtungsbestimmung der Strömung eines Fluides und ist ein Wegeventil, das den Durchgang des Fluides in einer der zwei Strömungsrichtungen selbsttätig sperrt.

Bekannt sind insbesondere sogenannte Kugelrückschlagventile, bei denen das Sperrelement durch eine Kugel gebildet ist, die durch eine Feder in den Ventilsitz gedrückt wird.

In einer alternativen Ausführungsform ist der Ventilsitz senkrecht zur Strömungsrichtung angeordnet und durch eine Klappe verschlossen. Die Klappe kann dabei insbesondere an einem oberen Bereich aufgehängt werden, so dass sie aufgrund ihres Eigengewichtes selbsttätig in die Sperrstellung gelangt.

Problematisch bei derartigen Rückschlagventilen ist zum einen die große Anzahl von Bauteilen. Zum anderen wird, insbesondere bei dem Rückschlagventil mit Klappe, die Fluidströmung in der Öffnungsposition aufgrund der zunächst etwa senkrecht zur Strömungsrichtung ausgerichteten Klappe gestört. Dies führt zu einem relativ geringen Wirkungsgrad. Ferner sind die erzielbaren Frequenzen bei schnellem Wechsel von Sperrposition in Öffnungsposition und umgekehrt relativ niedrig.

Kolbenpumpen sind Pumpen zur Förderung von Fluiden, wobei mit dem Kolben in einem ersten Takt das zu fördernde Fluid durch ein Einlassventil angesaugt wird. Anschließend wird es in einem zweiten Takt durch das Auslassventil ausgestoßen. Eine solche Pumpe kann auch als Verdrängerpumpe bezeichnet werden.

Aufgrund der hohen erzielbaren Drücke ist es nicht ausgeschlossen, dass zwischen dem Kolben und dem Pumpengehäuse Fluid austritt. Dies kann in geschlossenen

Kreisläufen unerwünscht sein. Ferner kann dies auch unerwünscht sein, wenn das Fluid dazu neigt, bei Stillstand auszukristallisieren oder Klumpen zu bilden. Dies gilt beispielsweise bei der Verwendung der Fluidpumpe zum Pumpen von Harnstoff. Derartige Pumpen werden in Harnstoffeinspritzsystemen verwendet, wie sie in Systemen zur Abgasreinigung von Dieselmotor betriebenen Fahrzeugen verwendet werden (sogenannte DNOX-Systeme).

Die Druckschrift DE-U-20 2005 019 518 zeigt eine Einrichtung zur Entlüftung eines Kurbelgehäuses einer Brennkraftmaschine, wobei die Einrichtung ein gattungsgemässes Rückschlagventil aufweist, das abhängig vom Gasdruck beiderseits des Rückschlagventils eine Gasströmung in einer Richtung vom Kurbelgehäuse zu einem Ansaugtrakt zulässt und eine Gasströmung in einer Richtung vom Ansaugtrakt zum Kurbelgehäuse sperrt. Das Rückschlagventil besteht aus einer Ventilzunge, die in einer Schließstellung an einem Ventilsitz anliegt und die in einem vollständig geöffneten Zustand an einem Ventilzungenanschlag anliegt.

Vor dem obigen Hintergrund ist es die Aufgabe der Erfindung, ein verbessertes Rückschlagventil sowie eine verbesserte Kolbenpumpe anzugeben.

Die obige Aufgabe wird bei dem eingangs genannten Rückschlagventil dadurch gelöst, dass das Anschlagelement als sich in Strömungsrichtung konisch aufweitendes Volumenelement ausgebildet ist, das den zwischen den Sperrlappen definierten Raum zu wenigstens 50 %, insbesondere zu wenigstens 80 % ausfüllt.

Ferner wird die obige Aufgabe bei der eingangs genannten Fluidpumpe dadurch gelöst, dass das erste und/oder das zweite Rückschlagventil als erfindungsgemäßes Rückschlagventil ausgebildet ist.

Vereinfacht lässt sich die Erfindung auch formulieren als Rückschlagventil mit schrägem Ventilsitz, an dem ein Sperrlappen aus elastisch verformbarem Material anliegt, dessen Auslenkung durch ein spezielles Anschlagelement begrenzt ist.

Das Anschlagelement kann zwei schräge Anschlagflächen für die zwei Sperrlappen bereitstellen. Ferner wird ein in Strömungsrichtung hinter den Sperrlappen liegender Totraum reduziert. Demzufolge ergibt sich eine geringere Verlustleistung und eine verbesserte Förderleistung.

Dies gilt insbesondere dann, wenn das Rückschlagventil Teil eines in Strömungsrichtung beweglichen Systems ist, beispielsweise an einem Kolben einer Fluidpumpe angeordnet ist. Hierdurch kann eine maximale Verdrängung mittels des Rückschlagventils in der Schließposition erfolgen, da der nicht genutzte Raum durch das Volumenelement ausgefüllt wird und folglich das Totvolumen im Druckbereich reduziert wird.

Im Bereich des Ventilsitzes ist eine Ventilöffnung ausgebildet, die eine Mehrzahl von Einzelöffnungen beinhalten kann, die gemeinschaftlich von einem Sperrlappen verschließbar sind.

Aufgrund der Ausbildung des Sperrlappens aus einem elastisch verformbaren Material kann erreicht werden, dass der Sperrlappen aufgrund der eigenen Elastizität in die Sperrposition vorgespannt ist. Demzufolge kann auch die Sperrposition generell sicher erreicht werden.

Vorzugsweise ist zudem der Winkel des Sperrlappens gegenüber der Längsachse im noch nicht eingebauten Zustand größer gleich und insbesondere größer als der entsprechende Winkel des Ventilsitzes. Hierdurch kann der Sperrlappen aufgrund der eigenen Elastizität sicher in die Sperrposition vorgespannt werden.

Die Funktion des erfindungsgemäßen Rückschlagventils ähnelt der Funktion von Fischkiemen, die strömungstechnisch aufgrund der Evolution ebenfalls optimiert sind. Selbst bei vergleichweise hohen Betätigungsfrequenzen des Rückschlagventils ergibt sich hier keine Flatterneigung.

Die erzielbare hohe Dynamik wird ferner dadurch erreicht, dass das Maß des Abhebens bzw. der Auslenkung des Sperrlappens von dem Ventilsitz durch das Anschlagelement begrenzt ist. Mit anderen Worten kann der Öffnungswinkel des Sperrlappens begrenzt werden. Hierdurch kann die Betätigungsfrequenz gesteigert werden, da der Sperrlappen schneller wieder in die Sperrposition gelangen kann. Da eine Ventilöffnung in der Regel ohnehin deutlich kleiner ist als die Fläche des Sperrlappens, kann dies auch ohne Verluste der Förderrate erreicht werden.

Das erfindungsgemäße Rückschlagventil ist für vergleichsweise hohe Betätigungsfrequenzen geeignet, beispielsweise für Betätigungsfrequenzen bis zu 20 Hz oder sogar bis zu 60 oder 70 Hz oder noch höher.

Zudem kann sich eine höhere Lebensdauer ergeben, da der elastisch verformbare Sperrlappen nur begrenzt ausgelenkt wird. Auch kann hierdurch gegebenenfalls eine geringere Verlustleistung erreicht werden, da das Schließen des Rückschlagventils schneller erfolgen kann und weniger Fluid hierbei zurückströmt.

Bei der erfindungsgemäßen Fluidpumpe kann ebenfalls eine höhere Dynamik bzw. eine höhere Pumpfrequenz des Kolbens erreicht werden.

Die Aufgabe wird somit vollkommen gelöst.

Bei dem erfindungsgemäßen Rückschlagventil ist es von besonderem Vorteil, wenn eine Anschlagfläche des Anschlagelementes schräg ausgerichtet ist, derart, dass der Sperrlappen auch in der Öffnungsposition schräg ausgerichtet ist.

Generell ist es möglich, dass der Sperrlappen in der Öffnungsposition flächig an der Anschlagfläche anliegt. Besonders bevorzugt ist jedoch, wenn der Sperrlappen in der Öffnungsposition einen anderen Winkel aufweist als die entsprechende Anschlagfläche. Hierdurch kann ein Anhaften der Flächen aufgrund adhäsiver Kräfte vermieden werden.

Im Idealfall kann der Sperrlappen in der Öffnungsposition flächig an der Anschlagfläche anliegen. Hierdurch können punktuelle Druckbelastungen auf die dem Anschlagelement zugewandte Seite des Sperrlappens vermieden werden.

Gemäß einer weiteren bevorzugten Ausführungsform erstreckt sich das Anschlagelement in Strömungsrichtung etwa so weit wie der Sperrlappen.

Hierdurch kann zum einen erreicht werden, dass auch ein in Strömungsrichtung distales Ende des Sperrlappens an dem Anschlagelement anliegt. Hierdurch kann vermieden werden, dass sich das distale Ende gegenüber dem Anschlagelement abbiegt. Ferner kann hierdurch auch die erzielbare Dynamik nochmals gesteigert werden.

Generell kann das Anschlagelement Teil des Ventilgehäuses sein oder als separates Bauteil an dem Ventilgehäuse befestigt sein.

Besonders bevorzugt ist es jedoch, wenn das Anschlagelement einstückig mit dem Sperrelement ausgebildet ist.

Bei dieser Ausführungsform kann die Bauteilanzahl bzw. die Komplexität des Ventilgehäuses verringert werden.

Dabei ist es besonders bevorzugt, wenn im Bereich des Übergangs zwischen dem Anschlagelement und dem Sperrlappen eine Ausnehmung ausgebildet ist, die zur Erhöhung der Beweglichkeit des Sperrlappens dient.

Bei dieser Ausführungsform kann der Sperrlappen eine gewisse Dicke besitzen, die auch bei einer großen Ventilöffnung in dem Ventilsitz für eine stabile Lage des Sperrlappens in der Sperrposition sorgen kann. Zum anderen kann durch eine solche Ausnehmung, die am proximalen Ende des Sperrlappens ausgebildet ist, die Beweglichkeit in Öffnungsrichtung bzw. Schließrichtung erhöht werden. Durch die somit erzielte Verbesserung der Biegeflexiblität gegenüber der Dicke des Sperrlappens im Dichtbereich kann folglich die Dynamik des Rückschlagventils noch einmal verbessert werden.

Bei dieser Ausführungsform sind an dem Ventilgehäuse in der Regel auch zwei Ventilsitze ausgebildet, die in entsprechender Weise im Längsschnitt eine V-Form bilden.

Hierdurch kann bei relativ geringem Bauraum eine hohe Durchflussmenge erreicht werden. Das Ventil beinhaltet folglich zwei parallele Rückschlagventile. Auf diese Weise können auch die auftretenden Radialkräfte gegeneinander kompensiert werden. Daher eignet sich diese Ausbildung bevorzugt auch dann, wenn das Rückschlagventil Teil eines in Strömungsrichtung beweglichen Systems ist, beispielsweise an einem Kolben einer Fluidpumpe angeordnet ist.

Dabei ist es von besonderem Vorteil, wenn die zwei Sperrlappen einstückig miteinander verbunden sind. Hierdurch kann die Bauteilanzahl gering gehalten werden. Bei der erfindungsgemässen Ausführungsform ist das Anschlagelement im Bereich zwischen den Sperrlappen angeordnet.

Hierdurch kann das Anschlagelement sowohl eine Anschlagfläche für den einen Sperrlappen als auch eine Anschlagfläche für den zweiten Sperrlappen aufweisen. Gemäß einer weiteren bevorzugten Ausführungsform ist das Anschlagelement so angeordnet, dass die Sperrlappen sich nicht berühren können.

Hierdurch können auch wechselseitige Beeinflussungen der Sperrlappen verhindert werden.

Insgesamt ist es ferner vorteilhaft, wenn das Sperrelement einen Befestigungsabschnitt aufweist, mittels dessen das Sperrelement an dem Ventilgehäuse befestigt ist.

Die Befestigung kann dabei mittels Schrauben erfolgen, durch Kleben, durch geometrischen Formschluss oder andere Befestigungsarten.

Besonders bevorzugt ist es jedoch, wenn das Ventilgehäuse eine Befestigungsausnehmung aufweist, die quer zur Strömungsrichtung ausgerichtet ist, wobei der Befestigungsabschnitt in die Befestigungsausnehmung eingesetzt ist, um das Sperrelement in Strömungsrichtung formschlüssig an dem Ventilgehäuse festzulegen.

Auf diese Weise kann die Befestigung des Sperrelementes an dem Ventilgehäuse ohne weitere Bauteile oder Materialien erfolgen. Denkbar hierbei ist, dass das Sperrelement einen quer zur Strömungsrichtung verlaufenden Wulst aufweist, der in eine entsprechende, quer verlaufende Ausnehmung des Ventilgehäuses eingesetzt ist, um eine axial formschlüssige Verbindung zu erzielen.

Von besonderem Vorteil ist es jedoch, wenn der Befestigungsabschnitt einen Ringabschnitt aufweist, der in eine ringförmige Befestigungsausnehmung des Ventilgehäuses eingesetzt ist.

Hierbei ist von besonderem Vorteil, dass das Sperrelement ohne weitere Maßnahmen auch in radialer Richtung an dem Ventilgehäuse fixiert werden kann.

Ferner ist es hierbei vorteilhaft, wenn der Ringabschnitt über wenigstens einen Längsstegabschnitt mit dem Sperrlappen verbunden ist.

Dies ermöglicht eine einstückige Ausbildung des Sperrelementes, wobei der Längsstegabschnitt den Ringabschnitt und den Sperrlappen (oder die zwei Sperrlappen) miteinander verbindet.

Ferner ist es vorteilhaft, wenn der Längsstegabschnitt in einer längs ausgerichteten Ausnehmung des Ventilgehäuses angeordnet ist.

Hierdurch kann der Befestigungsabschnitt des Sperrelementes beispielsweise in eine Zylinderkontur des Ventilgehäuses integriert werden, ohne dass der Befestigungsabschnitt in radialer Richtung nach außen gegenüber der Zylinderkontur vorsteht. Insbesondere ist diese Ausbildung daher für die Verwendung des Rückschlagventils an einem beweglichen Element wie einen Kolben geeignet.

Ferner ist es hierbei vorteilhaft, wenn die zwei Sperrlappen an einem Quersteg miteinander verbunden sind (beispielsweise in V-Form), dessen Enden jeweils über einen Längsstegabschnitt mit dem Ringabschnitt verbunden sind.

Diese Ausführungsform ermöglicht eine in axialer Richtung stabile Verbindung zwischen den Sperrlappen und dem Ringabschnitt.

Insgesamt ist es ferner bevorzugt, wenn das Ventilgehäuse einen Zylinderabschnitt aufweist, der wenigstens einen mit der Ventilöffnung verbundenen Längskanal aufweist, wobei der Ventilsitz an einer Stirnseite des Zylinderabschnittes ausgebildet ist.

Diese Ausführungsform ermöglicht zum einen einen einfachen Gehäuseaufbau. Denn der zweite Druckraum kann hierbei beispielsweise durch den Zylinderabschnitt und einen zweiten Gehäuseabschnitt gebildet sein. Der Längskanal bildet vorzugsweise einen Teil eines ersten Druckraumes. Ferner ist hierbei vorteilhaft, dass sich das Rückschlagventil auf einfache Weise in einen zylinderförmigen Kolben integrieren lässt, und zwar an dessen Stirnseite.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch ein Rückschlagventil in einer Sperrposition;
- Fig. 2: das Rückschlagventil der Fig. 1 in einer Öffnungsposition;
- Fig. 3: eine erste Ausführungsform eines erfindungsgemäßen Rückschlagventiles im schematischen Längsschnitt;
- Fig. 4: eine Seitenansicht einer weiteren Ausführungsform eines erfindungsgemäβen Rückschlagventils;
- Fig. 5: eine Längsschnittansicht durch das Rückschlagventil der Fig. 4;
- Fig. 6: ein Sperrelement eines erfindungsgemäßen Rückschlagventils, das sich insbesondere in Verbindung mit dem Rückschlagventil der Fig. 4 und 5 verwenden lässt; und
- Fig. 7: eine abgewandelte Ausführungsform eines Ventilgehäuses des Rückschlagventils der Fig. 4 und 5; und
- Fig. 8: eine schematische Darstellung einer erfindungsgemäßen Fluidpumpe.

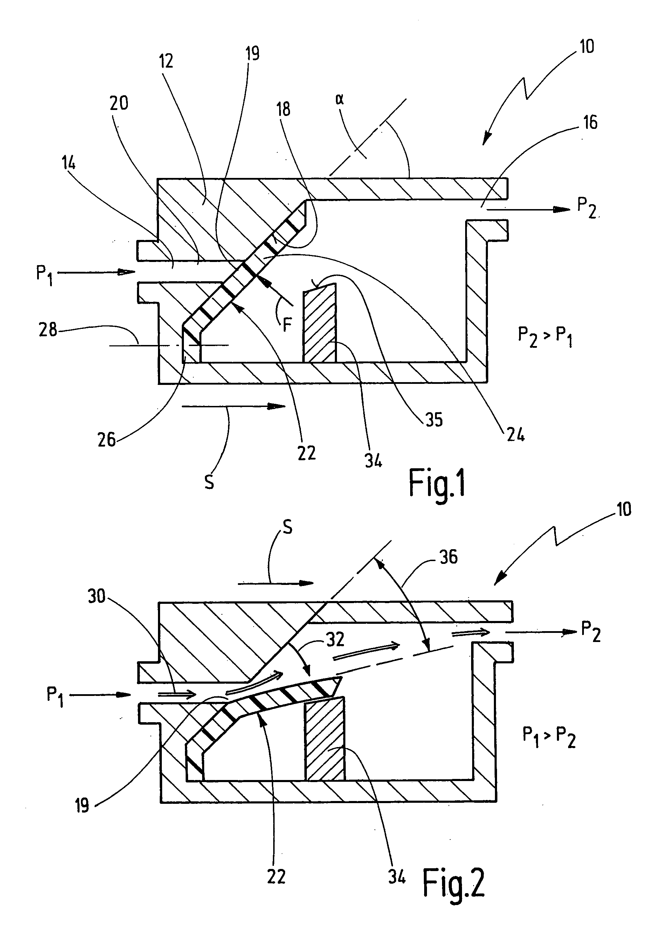

In Fig. 1 ist eine nicht von der Erfindung umfasste Ausführungsform eines Rückschlagventils generell mit 10 bezeichnet. Das Rückschlagventil 10 weist ein Ventilgehäuse 12 auf. Das Ventilgehäuse trennt einen ersten Druckraum 14, in dem ein Fluid einen ersten Fluiddruck P₁ besitzt, von einem zweiten Druckraum 16, in dem das Fluid einen zweiten Druck P₂ besitzt.

Im Inneren des Ventilgehäuses 12 ist ein Ventilraum ausgebildet, der mit dem zweiten Druckraum 16 verbunden ist.

Das Rückschlagventil richtet eine Strömungsrichtung S ein, über die Fluid von dem ersten Druckraum 14 in den zweiten Druckraum 16 gelangen kann. Die Strömungsrichtung S ist parallel zu einer Längserstreckung des Rückschlagventils 10.

Eine dem ersten Druckraum 14 zugewandte Seite des Ventilraumes ist als Ventilsitz 18 ausgebildet. Der Ventilsitz 18 ist dabei als Schrägfläche ausgebildet, die in Bezug auf die Strömungsrichtung S einen Winkel größer 15° und kleiner 80° einnimmt, insbesondere größer 30° und kleiner 60°, im vorliegenden Fall 45°.

An dem Ventilsitz 18 ist eine Ventilöffnung 19 ausgebildet, die über einen Längskanal 20 in dem Ventilgehäuse 12 mit dem ersten Druckraum 14 verbunden ist. Die Ventilöffnung 19 kann eine einzelne Ventilöffnung sein oder aus einer Mehrzahl von separaten Einzelöffnungen bestehen, die mit dem ersten Druckraum 14 verbunden sind.

Die Schrägfläche des Ventilsitzes 18 kann als plane Fläche ausgebildet sein, wie es in Fig. 1 dargestellt ist. Die Schrägfläche kann jedoch auch als gewölbte Fläche ausgebildet sein, die beispielsweise im Längsschnitt und/oder im Querschnitt konkav oder konvex ausgeformt ist.

In dem Ventilraum ist ferner ein Sperrelement 22 des Rückschlagventils 10 angeordnet. Das Sperrelement 22 ist aus einem elastisch verformbaren Material, insbesondere einem Kunststoffmaterial hergestellt und weist einen Sperrlappen 24 auf. Der Sperrlappen 24 ist hinsichtlich seiner Form an den Ventilsitz 18 angepasst, ist also im vorliegenden Fall als ebener Lappen ausgebildet (kann jedoch ein gewölbter Lappen sein).

Das Sperrelement 22 weist ferner einen einstückig mit dem Sperrlappen 24 ausgebildeten Befestigungsabschnitt 26 auf. Der Befestigungsabschnitt 26 ist in einem in Strömungsrichtung S gesehen hinteren Bereich des Ventilsitzes 18 an dem Ventilgehäuse 12 festgelegt. Hierzu verwendete Befestigungsmittel 28 sind in Fig. 1 schematisch dargestellt. Die Befestigungsmittel können beispielsweise gebildet sein durch eine oder mehrere Schrauben, Nieten oder ähnliches. Die Befestigungsmittel 28 können jedoch auch durch eine Verklebung gebildet sein. Alternativ ist es auch möglich, den Befestigungsabschnitt 26 im Zweikomponenten-Verfahren einstückig mit dem Ventilgehäuse 12 auszubilden.

Das Sperrelement 22 ist wie gesagt aus einem elastischen Material gebildet und ist über den Befestigungsabschnitt 26 so an dem Ventilgehäuse 12 angebracht, dass ein Sperrlappen 24 in einer entspannten Position (also nicht elastisch ausgelenkt) an dem Ventilsitz 18 anliegt. Alternativ ist es auch möglich, das Sperrelement so auszubilden, dass der Sperrlappen 24 mit einer gewissen Vorspannung in Richtung entgegengesetzt zu der Strömungsrichtung S an dem Ventilsitz 18 anliegt.

In Fig. 1 ist das Rückschlagventil 10 in einer Sperrposition gezeigt, bei der der zweite Druck P₂ größer ist als der erste Druck P₁. Hierdurch wird der Sperrlappen 24 gegen den Ventilsitz 18 angedrückt. Die Ventilöffnung 19 ist folglich geschlossen.

Es versteht sich, dass bei der obigen Betrachtung der Drücke auch der von dem Sperrelement 22 gegebenenfalls aufgebrachte Eigendruck entgegen der Strömungsrichtung S mit berücksichtigt sein kann.

In Fig. 2 ist das Rückschlagventil 10 in einer Öffnungsposition gezeigt. Hierbei ist der erste Druck P₁ größer als der zweite Druck P₂ (wiederum kann die eventuelle Vorspannkraft des Sperrlappens 24 mit einbezogen sein). Aufgrund des größeren Druckes P₁ drückt ein in dem ersten Druckraum 14 befindliches Fluid den Sperrlappen 24 von dem Ventilsitz 18 weg und lenkt diesen aus, wie es schematisch bei 32 gezeigt ist. Hierdurch kann das Fluid 30, wie es durch Doppelpfeile gezeigt ist, von dem ersten Fluidraum 14 in den zweiten Fluidraum 16 strömen. Dabei trifft das Fluid 30 nicht frontal sondern schräg auf die dem ersten Druckraum 14 zugewandte Seite des Sperrlappens 24 auf, so dass es strömungstechnisch günstig von dem ersten Fluidraum 14 in den zweiten Fluidraum 16 geleitet werden kann. Insbesondere ergeben sich nur wenige Verwirbelungen und sonstige strömungstechnisch ungünstige Phänomene. Mit anderen Worten wird der Sperrlappen 24 schräg bzw. seitlich angeströmt, ähnlich wie Kiemen eines Fisches.

Insgesamt kann mit dem Rückschlagventil eine hohe Betätigungsfrequenz erreicht werden, beispielsweise größer 50 Hz, ohne dass ein Flattern des Sperrelementes auftritt. Die Form des Sperrlappens 24 kann ferner so gewählt sein, dass bei einer Druckumkehr zur Einleitung eines Saugtaktes ein Zurückdrücken des Sperrlappens in Richtung gegen den Ventilsitz 18 begünstigt wird (beispielsweise durch geeignete Ausformung eines vorderen Endes des Sperrlappens, wie es in Fig. 2 schematisch angedeutet ist.

In Fig. 1 und 2 ist ferner gezeigt, dass in dem Ventilraum ein Anschlagelement 34 dazu ausgelegt ist, das Maß des Abhebens bzw. der Auslenkung 32 des Sperrlappens 24 gegenüber dem Ventilsitz 18 zu begrenzen, und zwar auf einen Winkel 36. Der Winkel 36 kann im Bereich von wenigen Grad bis 45° liegen und beträgt in der dargestellten Ausführungsform 30°. Vorzugsweise ist der Winkel der maximalen Auslenkung 32 jedoch kleiner als 30°.

Das Anschlagelement weist eine Anschlagfläche 35 auf, die vorzugsweise schräg ausgerichtet ist, und zwar so, dass die dem Ventilsitz 18 abgewandte Seite des Sperrlappens 24 in der Öffnungsposition flächig daran anliegt.

Die Betätigungsfrequenz des Rückschlagventils kann durch das Anschlagelement 34 weiter erhöht werden. Denn durch das Anschlagelement kann verhindert werden, dass das Anschlagelement bis parallel zur Strömungsrichtung oder darüber hinaus ausgelenkt wird. Demzufolge kann das Sperrelement auch schneller wieder von der Öffnungsposition in die Sperrposition zurückbewegt werden.

Nachstehend werden weitere alternative Ausführungsformen von erfindungsgemäβen Rückschlagventilen erläutert. Diese entsprechen hinsichtlich dem generellen Aufbau und der generellen Funktionsweise dem oben beschriebenen Rückschlagventil 10 der Fig. 1 und 2. Im Folgenden werden lediglich Unterschiede erläutert.

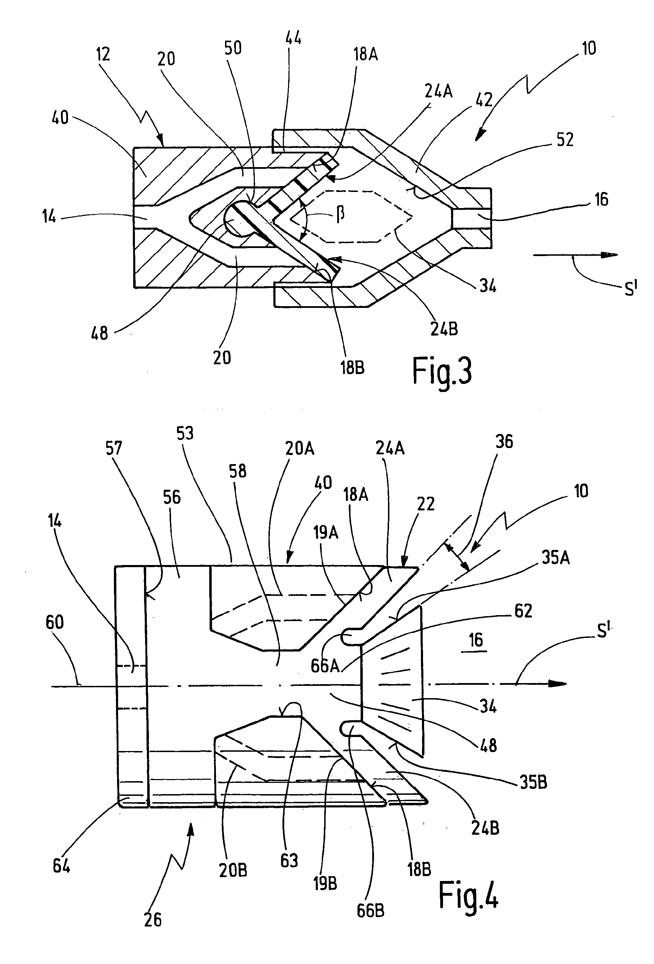

Fig. 3 zeigt eine erfindungsgemässe Ausführungsform eines Rückschlagventils, das ein Ventilgehäuses 12 mit einem ersten Teilgehäuse 40 und einem zweiten Teilgehäuse 42 aufweist, die beispielsweise über einen Gewindeeingriff 44 oder Ähnliches miteinander verbunden sind.

Ferner weist das Rückschlagventil 10 der Fig. 3 ein Sperrelement 22 auf, das zwei Sperrlappen 24A, 24B beinhaltet, die vorzugsweise einstückig miteinander verbunden sind. Die Sperrlappen 24A, 24B liegen an entsprechenden Ventilsitzen 18A, 18B des ersten Teilgehäuses 40 an, die gegenüber der Strömungsrichtung S in entgegengesetzter Richtung geneigt sind. Demgemäß sind die Ventilsitze 18A, 18B bzw. die Sperrlappen 24A, 24B V-förmig angeordnet und schließen eine Winkel β ein, der vorzugsweise größer ist als 40° und kleiner als 150°.

Jedem der Ventilsitze 18A, 18B ist ein eigener Längskanal 20 zugeordnet, wobei die Längskanäle 20 jeweils mit dem ersten Druckraum 14 verbunden sind. In Fig. 3 sind zwei Längskanäle 20 dargestellt, also ein Längskanal 20 pro Sperrlappen 24. Es können jedoch auch pro Sperrlappen 24 mehrere Längskanäle 20 (und entsprechende Ventilöffnungen) vorgesehen sein.

Ferner sind die zwei Sperrlappen 24A, 24B einstückig miteinander verbunden, zwar über einen Quersteg 48. In der dargestellten Ausführungsform ist der Quersteg 48 im Längsschnitt wulstförmig ausgebildet und ist in Querrichtung (senkrecht zur Darstellungsebene) in eine Befestigungsausnehmung 50 des ersten Teilgehäuses 40 eingeschoben. Hierdurch kann das Sperrelement 22 ohne weitere Befestigungsmittel in Strömungsrichtung S formschlüssig mit dem ersten Teilgehäuse 40 verbunden werden.

Der mit dem zweiten Druckraum 16 verbundene Ventilraum ist in dieser Ausführungsform zwischen dem ersten und dem zweiten Teilgehäuses 40, 42 ausgebildet. Das zweite Ventilgehäuse 42 kann dabei eine Konusfläche 52 beinhalten, die sich in Strömungsrichtung verjüngt, hin zu dem zweiten Druckraum 16. Hierdurch kann die Strömung des Fluides 30 in der Öffnungsposition hinsichtlich strömungstechnischer Gesichtpunkte noch weiter optimiert werden.

In Fig. 3 ist ferner ein Anschlagelement 34 gezeigt, das zwischen den zwei Sperrlappen 24A, 24B angeordnet ist und das Maß der maximalen Auslenkung der Sperrlappen 24A, 24B begrenzt. Ferner ist das Anschlagelement 34 als Volumenelement ausgebildet, das sich in den Ventilraum hinein erstreckt und folglich den Totraum des Rückschlagventils reduziert.

Fig. 4 zeigt eine weitere Ausführungsform eines erfindungsgemäßen Rückschlagventiles, das generell hinsichtlich Aufbau und Funktion dem Rückschlagventil der Fig. 3 entspricht.

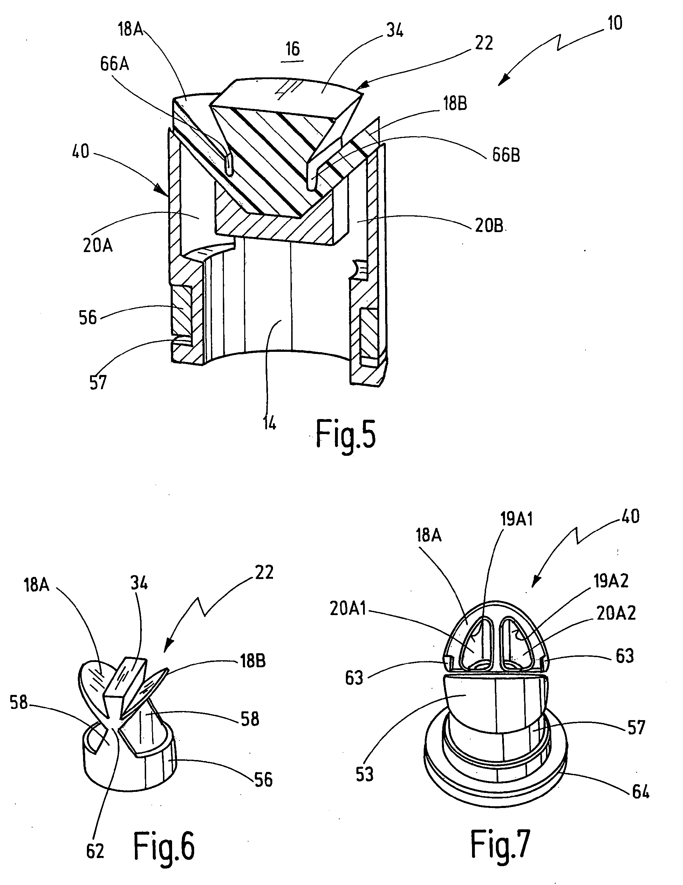

Es ist zu erkennen, dass in Fig. 4 nur ein erstes Teilgehäuse 40 dargestellt ist, das einen Zylinderabschnitt 53 aufweist. Das Sperrelement 22 ist an dem Zylinderabschnitt 53 festgelegt. Ferner unterscheidet sich das Rückschlagventil der Fig. 4 von jenem der Fig. 3 durch die Art der Ausbildung des Befestigungsabschnittes 26. Während bei der Ausführungsform der Fig. 3 der Befestigungsabschnitt durch einen Quersteg mit Wulstform ausgebildet ist, ist bei der Ausführungsform der Fig. 4 ein Befestigungsabschnitt 26 vorgesehen, der einen Ringabschnitt 56 aufweist. Der Ringabschnitt 56 ist in einer um den Zylinderabschnitt 53 umlaufenden ringförmigen Befestigungsausnehmung 57 aufgenommen, so dass der Ringabschnitt 56 in radialer Richtung nicht gegenüber der Außenkontur des Zylinderabschnittes 53 hervortritt. Der Ringabschnitt 56 ist mit den einstückig verbundenen Sperrlappen 24A, 24B über Längsstegabschnitte 58 verbunden. Genauer gesagt weist der Befestigungsabschnitt 26 zwei auf radial gegenüberliegenden Seiten des Zylinderabschnittes 53 angeordnete Längsstegabschnitte 58 auf, von denen in Fig. 4 nur einer dargestellt ist. Aufgrund der Schnittdarstellung in Fig. 5 ist dort keiner der Längsstegabschnitte 58 gezeigt.

Die Längsstegabschnitte 58 sind an ihrem dem Ringabschnitt 56 abgewandten Ende mit einem jeweiligen radialen Ende eines Quersteges 48 verbunden, der die Sperrlappen 24A, 24B miteinander verbindet. Das eine Ende des Quersteges 48 ist in Fig. 4 mit 62 bezeichnet. Die Anordnung des Rückschlagventils 10 ist symmetrisch in Bezug auf eine durch die Längsachse des Zylinderabschnittes 53 verlaufende Symmetrieachse 60.

Bei 63 sind ferner in Fig. 4 Längsausnehmungen an dem Außenumfang des Zylinderabschnittes 53 gezeigt, in die die Längsstegabschnitte 58 eingelegt sind. Daher tritt das Absperrelement 22 insgesamt nicht gegenüber der Außenkontur des Zylinderabschnittes 53 vor. Hierdurch eignet sich das in Fig. 4 und 5 dargestellte Rückschlagventil insbesondere auch zur Verwendung als linear bewegliches Element, insbesondere als Teil eines Kolbens einer Fluidpumpe. Bei Verwendung in einem Kolben einer Fluidpumpe ist das zweite Ventilgehäuse vorzugsweise durch einen Zylinder gebildet, innerhalb dessen der Kolben geführt ist.

Das Anschlagelement 34 ist bei dieser Ausführungsform einstückig mit dem Sperrelement 22 ausgebildet und erstreckt sich konisch aufweitend zwischen den zwei Sperrlappen 24A, 24B. Der maximale Öffnungswinkel der Sperrlappen 24A, 24B, bei denen diese an den jeweiligen Anschlagflächen 35A, 35B anliegen, beträgt im vorliegenden Fall etwa 10°.

Das Anschlagelement 34 erstreckt sich in Strömungsrichtung S etwa bis zum Ende der Sperrlappen 24A, 24B, so dass der dazwischen definierte Raum zu mindestens 50 %, im vorliegenden Fall zu etwa 80 % ausgefüllt ist. Hierdurch wird ein Totvolumen verringert, das sich in Strömungsrichtung an das Sperrelement anschließt.

Das Anschlagelement 34 ist ferner so ausgebildet, dass die Sperrlappen 24A, 24B sich nicht berühren können.

Im Bereich eines Überganges zwischen dem Anschlagelement 34 und den Sperrlappen 24A, 24B ist jeweils eine im Wesentlichen quer zur Längsachse 60 ausgerichtete Ausnehmung 66A bzw. 66B ausgebildet. Die Ausnehmungen 66A, 66B dienen der Erhöhung der Beweglichkeit bzw. Biegeflexibilität der Sperrlappen 24A, 24B. Die Ausnehmungen 66A, 66B sind vorzugsweise in axialer Projektion nicht überschneidend sondern benachbart zu den Längskanälen 20A, 20B angeordnet, die jeweils in den Ventilsitzen 18A, 18B in Form jeweiliger Ventilöffnungen 19A, 19B münden.

In Fig. 6 und 7 sind das Sperrelement 22 und das erste Teilgehäuse 40 jeweils separat dargestellt, um die oben beschriebenen Funktionen zu verdeutlichen. Man erkennt in Fig. 7 ferner, dass das erste Teilgehäuse 40 an seinem in Strömungsrichtung vorderen Ende einen gegenüber dem Zylinderabschnitt 53 radial vorstehenden Flanschabschnitt 64 aufweisen kann, mittels dessen das erste Teilgehäuse 40 mit dem zweiten Teilgehäuse 42 verbunden und gegenüber diesem abgedichtet werden kann. Ferner ist in Fig. 7 zu erkennen, dass jedem Sperrlappen nicht nur eine sondern zwei Längskanäle 20A1, 20A2 zugeordnet sein können, die jeweils in einer Ventilöffnung 19A1 bzw. 19A2 münden.

Die oben beschriebenen Ausführungsformen von Rückschlagventilen lassen sich sämtlich als stationäre, unbewegliche Rückschlagventile in einer beliebigen Anwendung verwenden. Als Fluid kommen sowohl flüssige als auch gasförmige Stoffe in Betracht.

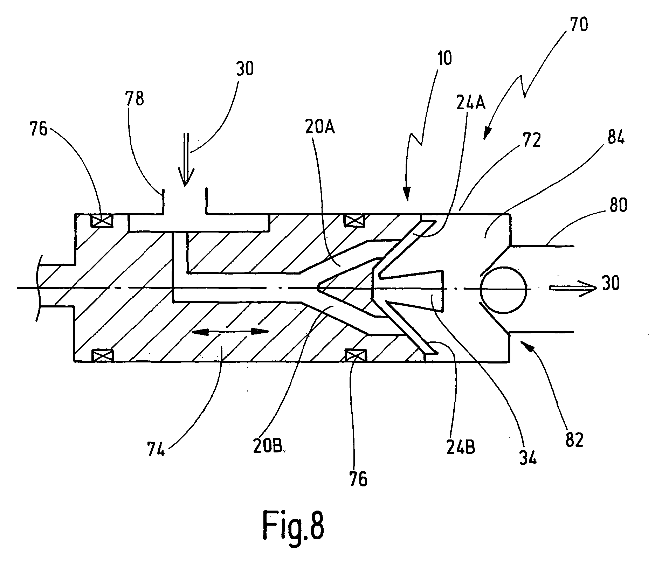

In Fig. 8 ist in schematischer Form eine Kolbenpumpe 70 gezeigt. Die Fluidpumpe 70 weist ein Pumpengehäuse 72 in Form eines Zylinders auf, in dem ein Kolben 74 geführt ist. Der Kolben 74 ist gegenüber dem Zylindergehäuse 72 durch Dichtungen 76 und/oder einen Faltenbalg abgedichtet. Ferner ist an einem Außenumfang des Pumpengehäuses 72 ein Sauganschluss 78 vorgesehen. An einem axialen Ende des Pumpengehäuses 72 ist ein Druckanschluss 80 ausgebildet. In dem Kolben sind Längskanäle ausgebildet, die den Sauganschluss 78, über den ein Fluid 30 angesaugt wird, mit einem Rückschlagventil 10 verbinden, das an dem vorderen Ende des Kolbens 74 angeordnet ist. Das Rückschlagventil 10 entspricht hinsichtlich Aufbau und Funktionsweise generell dem Rückschlagventil der Fig. 4 bis 5 oder einem anderen Rückschlagventil gemäß den oben beschriebenen Ausführungsformen und weist zwei Sperrlappen 24A, 24B auf, zwischen denen ein Anschlagelement 34 angeordnet ist.

Ferner beinhaltet die Fluidpumpe 70 ein zweites Rückschlagventil 82, das schematisch als Kugelrückschlagventil angedeutet ist, jedoch ebenfalls als Rückschlagventil gemäß einer der obigen Ausführungsformen ausgebildet sein kann. Zwischen den Rückschlagventilen 10, 82 ist ein Ventilraum 84 ausgebildet.

Die Funktionsweise der Fluidpumpe 70 beinhaltet einen ersten Arbeitstakt, bei dem der Kolben zurückbewegt wird (in der Fig. 8 nach links), wobei über den Sauganschluss 78 ein Fluid in den Ventilraum 84 eingesaugt wird. Hierbei ist das Rückschlagventil 10 geöffnet und das zweite Rückschlagventil 82 geschlossen. In einem zweiten Arbeitstakt wird der Kolben 74 in die entgegengesetzte Richtung bewegt. Hierbei ist das Rückschlagventil 10 geschlossen und das zweite Rückschlagventil 82 geöffnet, so dass das in dem Ventilraum 84 befindliche Fluid über den Druckanschluss 80 herausgedrückt wird, bis der Kolben 74 einen oberen Totpunkt erreicht. Der Ventilraum 84 ist dann ein Totraum, dessen Volumen möglichst minimal sein soll. Demzufolge ist das Anschlagelement 34 als Volumenelement ausgebildet, das wenigstens 50 % des Raumes zwischen den Sperrlappen 24A, 24B einnimmt. Aus Übersichtlichkeitsgründen ist dies in Fig. 8 nicht besonders dargestellt.

Im Anschluss an den zweiten Arbeitstakt schließt sich wieder ein dritter Arbeitstakt an, der dem ersten Arbeitstakt entspricht.

Durch das Anschlagelement kann zudem das Maß der Auslenkung der Sperrlappen 24A, 24B verringert werden. Hierdurch kann eine sehr hohe Taktfrequenz bzw. Betätigungsfrequenz des Kolbens 74 erreicht werden. Demzufolge ergibt sich eine hohe Förderleistung. Aufgrund des geringen Totvolumens ergibt sich zudem eine geringe Verlustleistung.

Da die Fluidpumpe 70 zudem keine oder nur sehr geringe Toträume aufweist, eignet sich die Fluidpumpe insbesondere zum Fördern von Fluiden, die auskristallisierbare Bestandteile beinhalten, wie beispielsweise eine Harnstofflösung. Derartige Fluidpumpen können folglich in DNOX-Systemen verwendet werden.

## Patentansprüche

1. Rückschlagventil (10) mit einem Ventilgehäuse (12), an dem ein Ventilsitz (18) ausgebildet ist, der in Bezug auf eine Strömungsrichtung (S) als Schrägfläche ausgebildet ist, und mit einem Sperrelement (22), das wenigstens einen flächigen Sperrlappen (24) aus einem elastisch verformbaren Material aufweist, der in einer Sperrposition an dem Ventilsitz (18) anliegt und in einer Öffnungsposition von dem Ventilsitz (18) abgehoben ist, um den Durchgang von Fluid (30) zu ermöglichen, wobei auf der dem Ventilsitz abgewandten Seite des Sperrlappens (24) ein Anschlagelement (34) angeordnet ist, gegen das der Sperrlappen (24) anschlagen kann, um das Maß des Abhebens des Sperrlappens (24) von dem Ventilsitz zu begrenzen, wobei das Sperrelement (22) zwei Sperrlappen (24A, 24B) aufweist, die im Längsschnitt V-förmig ausgerichtet sind,
**dadurch gekennzeichnet, dass**
das Anschlagelement (34) als ein sich in Strömungsrichtung (S) konisch aufweitendes Volumenelement ausgebildet ist, das den zwischen den Sperrlappen (24A, 24B) definierten Raum zu wenigstens 50% ausfüllt.

2. Rückschlagventil nach Anspruch 1, wobei eine Anschlagfläche (35) des Anschlagelementes (34) schräg ausgerichtet ist, derart, dass der Sperrlappen (24) auch in der Öffnungsposition schräg ausgerichtet ist.

3. Rückschlagventil nach Anspruch 1 oder 2, **dadurch gekennzeichnet, dass** das Anschlagelement (34) sich in Strömungsrichtung (S) etwa so weit erstreckt wie der Sperrlappen (24).

4. Rückschlagventil nach einem der Ansprüche 1 - 3, **dadurch gekennzeichnet, dass** das Anschlagelement (34) einstückig mit dem Sperrelement (22) ausgebildet ist.

5. Rückschlagventil nach Anspruch 4, **dadurch gekennzeichnet, dass** im Bereich des Übergangs zwischen dem Anschlagelement (34) und dem Sperrlappen (24) eine Ausnehmung (66) ausgebildet, die zur Erhöhung der Beweglichkeit des Sperrlappens (24) dient.

6. Rückschlagventil nach einem der Ansprüche 1 - 5 **dadurch gekennzeichnet, dass** das Anschlagelement (34) so angeordnet ist, dass die Sperrlappen (24A, 24B) sich nicht berühren können.

7. Fluidpumpe (70) mit einem Pumpengehäuse (72) und einem darin verschieblich gelagerten Kolben, der mit dem Pumpengehäuse (72) einen Druckraum bildet, wobei ein Sauganschluss der Pumpe (70) über ein erstes Rückschlagventil mit dem Druckraum verbunden ist und wobei der Druckraum über ein zweites Rückschlagventil mit einem Druckanschluss der Pumpe verbunden ist,
**dadurch gekennzeichnet, dass**
das erste und/oder das zweite Rückschlagventil gemäß einem der Ansprüche 1-6 ausgebildet ist.

## Claims

1. A check valve (10) with a valve housing (12), on which is formed a valve seat (18) which is designed as an oblique face with respect to a flow direction (S), and with a shut-off element (22) having at least one sheet-like shut-off tab (24) which is composed of an elastically deformable material and which, in a shut-off position, bears against the valve seat (18) and, in an opening position, is lifted off from the valve seat (18), in order to allow the passage of fluid (30), there being arranged on that side of the shut-off tab (24) which faces away from the valve seat an abutment element (34), against which the shut-off tab (24) can abut, in order to limit the amount by which the shut-off tab (24) is lifted off from the valve seat, wherein the shut-off element (22) has two shut-off tabs (24A, 24B) which are oriented in a V-shaped manner in longitudinal section,
**characterized in that**
the abutment element (34) is designed as volume element which widens conically in the flow direction (S) and which fills the space defined between the shut-off tabs (24A, 24B) in an amount of at least 50%.

2. The check valve as claimed in claim 1, an abutment face (35) of the abutment element (34) being oriented obliquely in such a way that the shut-off tab (24) is also oriented obliquely in the opening position.

3. The check valve as claimed in claim 1 or 2, **characterized in that** the abutment element (34) extends approximately as far as the shut-off tab (24) in the flow direction (S).

4. The check valve as claimed in one of claims 1 - 3, **characterized in that** the abutment element (34) is formed in one piece with the shut-off element (22).

5. The check valve as claimed in claim 4, **characterized in that** a recess (66), which serves for increasing the movability of the shut-off tab (24), is formed in the region of the transition between the abutment element (34) and the shut-off tab (24).

6. The check valve as claimed in one of claims 1- 5, **characterized in that** the abutment element (34) is arranged such that the shut-off tabs (24A, 24B) cannot touch each other.

7. A fluid pump (70) with a pump housing (72) and with a piston which is mounted displaceably therein and forms with the pump housing (72) a pressure space, a suction connection of the pump (70) being connected to the pressure space via a first check valve, and the pressure space being connected to a pressure connection of the pump via a second check valve, **characterized in that** the first and/or the second check valve are/is designed according to one of claims 1 - 6.

## Revendications

1. Clapet anti-retour (10) comprenant un boîtier de soupape (12), sur lequel est réalisé un siège de soupape (18) qui est réalisé sous forme de surface oblique par rapport à une direction d'écoulement (S), et comprenant un élément d'arrêt (22) qui présente au moins un volet d'arrêt plan (24) constitué d'un matériau déformable élastiquement, qui, dans une position d'arrêt, s'applique contre le siège de soupape (18) et dans une position d'ouverture, est soulevé du siège de soupape (18), afin de permettre le passage de fluide (30), un élément de butée (34) étant disposé du côté du volet d'arrêt (24) opposé au siège de soupape, contre lequel élément de butée le volet d'arrêt (24) peut buter, afin de limiter l'ampleur du soulèvement du volet d'arrêt (24) du siège de soupape, l'élément d'arrêt (22) présentant deux volets d'arrêt (24A, 24B) qui sont orientés en forme de V en coupe longitudinale,
**caractérisé en ce que**
l'élément de butée (34) est réalisé sous forme d'élément volumique s'élargissant de manière conique dans la direction d'écoulement (S), qui remplit au moins 50 % de l'espace défini entre les volets d'arrêt (24A, 24B).

2. Clapet anti-retour selon la revendication 1, dans lequel une surface de butée (35) de l'élément de butée (34) est orientée obliquement de telle sorte que le volet d'arrêt (24) soit également orienté obliquement dans la position d'ouverture.

3. Clapet anti-retour selon la revendication 1 ou 2, **caractérisé en ce que** l'élément de butée (34) s'étend dans la direction d'écoulement (S) approximativement aussi loin que le volet d'arrêt (24).

4. Clapet anti-retour selon l'une quelconque des revendications 1 à 3, **caractérisé en ce que** l'élément de butée (34) est réalisé d'une seule pièce avec l'élément d'arrêt (22).

5. Clapet anti-retour selon la revendication 4, **caractérisé en ce que** dans la région de la transition entre l'élément de butée (34) et le volet d'arrêt (24) est réalisé un évidement (66) qui sert à augmenter la mobilité du volet d'arrêt (24).

6. Clapet anti-retour selon l'une quelconque des revendications 1 à 5, **caractérisé en ce que** l'élément de butée (34) est disposé de telle sorte que les volets d'arrêt (24A, 24B) ne puissent pas se toucher.

7. Pompe fluidique (70) comprenant un boîtier de pompe (72) et un piston monté de manière déplaçable dans celui-ci, qui forme avec le boîtier de pompe (72) un espace de pression, un raccord d'aspiration de la pompe (70) étant connecté par le biais d'un premier clapet anti-retour à l'espace de pression et l'espace de pression étant connecté par le biais d'un deuxième clapet anti-retour à un raccord de pression de la pompe, **caractérisée en ce que**
le premier et/ou le deuxième clapet anti-retour sont réalisés selon l'une quelconque des revendications 1 à 6.
